# EUROPEAN PATENT APPLICATION

(11) **EP 2 129 079 A1**
(43) Date of publication of application: **02.12.2009**
(21) Application number: 08009798.3
(22) Date of filing: 29.05.2008
(51) Int. Cl.: H04L 29/08, H04N 7/173, H04L 29/06, G06F 17/30, B64D 11/00

(54) **An on-board module and associated method for delivery of content**

(71) Applicant: Vodtec BVBA, 9050 Gent (Ledeberg) (BE)
(72) Inventor: Van Quickenborne, Frederic, B-8000 Brugge (BE); Van Quickenborne, Christophe, 1730 Asse (BE)
(74) Representative: BiiP cvba

(57) **Abstract**

The present invention relates to an on-board content delivery system. The content- delivery system comprises at least one module (102,202,203) for delivery of content items to a mobile terminal (103,104) of a user on board of a vehicle (101). The system comprises storage means (204) for storing the content items and communication means (205) for communication with mobile terminals (103,104). The communication means (205) comprise at least a wireless communication interface. The system further comprises processing means (206) for obtaining a user-specific and/or terminal-specific version of a requested content item before and/or during delivery. The communication means (205) are coupled to the processing means (206) for transferring the user-specific and/or terminal-specific version to the mobile terminal (103,104).

## Description

### Field of the Invention

The present invention generally relates to content delivery and more in particular delivery of content to commuters, travellers and people moving around in vehicles such as busses, airplanes, trains, boats, etc.

### Background of the Invention

People who travel frequently on public transport, such as commuters, often look for a way to spend their time while travelling. People can take something to read with them, such as a newspaper or a book, listen to music on a personal portable music player, watch a movie on a mobile television or DVD-player, play games on a portable game console or mobile telephone, etc. However this generally means that the person has to carry the extra weight of the book, portable television, DVD-player, etc. which may not always be convenient. For instance a person who already has to carry a lot of weight to his destination, may not be able or willing to carry additional weight for some entertainment during travel.

A lot of such commuters and travellers already carry a personal mobile terminal such as a mobile telephone, personal digital assistant (PDA) or a laptop computer. Such devices are thus ideally suited for providing entertainment or information to the travellers or commuters during their journey without requiring them to have additional material with them. Mobile terminals already offer features which enable the travellers or commuters to enjoy games or music or even video which has been downloaded to the mobile terminal by the user of the terminal. This however implies that the user has to retrieve content from a source such as the Internet, a CD, DVD, etc. and copy the content onto his mobile terminal before starting the journey. As a consequence the user is restricted to the content which is installed on the mobile device before leaving his premises or office and thus a user is unable to acquire new content while travelling.

Some solutions exist which enable a user to instantly download content from the Internet using a mobile terminal. The mobile terminals thereto are able to communicate with servers via communication links based on wireless communication such as General Packet Radio Service (GPRS) or Universal Mobile Telecommunications System (UMTS) links. An advantage of such solutions is that a user obtains content which corresponds to his current interests and there is no need to select and copy content to the device before commencing a journey. However, an important disadvantage is that the available bandwidth on such links is limited. A user may therefore experience a delay between requesting content from an Internet source and receiving the content or being able to experience the content. In addition, if a large number of users are retrieving content via an UMTS or GPRS link simultaneously, the available bandwidth for each user may be reduced due to effects such as interference and the available capacity at nearby antennas. This is especially the case for commuters: they are grouped together on a limited space and are thus all using the same antenna, leading to congestion of the available bandwidth. The bandwidth on such UMTS or GPRS links also comes at a high price. Operators typically charge a higher price for data transfer using UMTS or GPRS than for regular communication traffic. The use of a content delivery system can therefore result in high bills which may hold people back from retrieving content using their mobile terminals.

Another problem which is related to the antennas of mobile communication systems is coverage. Each antenna has a range wherein it can serve user terminals of a connection for communication. Areas with a dense population typically do not experience coverage problems. Users are able to establish a connection with an antenna over which content can be retrieved. However, in areas with lower population densities, coverage will typically be limited by network operators. This is again especially the case for commuters for instance on trains which are typically travelling through less populated areas with hence less coverage. A user is then unable to retrieve content which means that a user has to resort to content stored on their mobile terminal.

A solution to the problems of content delivery systems wherein a user is able to retrieve the content he desires with a mobile terminal is the use of local storage inside the vehicle wherefrom a user can retrieve content. A user no longer requires an expensive link with possibly limited bandwidth to retrieve content from a remote storage, server or the Internet as content can be retrieved from a local storage via a less expensive communication link such as Bluetooth. These links are free to use, provide more bandwidth and have good coverage within a small area such as within a vehicle. Local storage is considered as any storage which is present on the vehicle and which has content stored thereon that can be requested by a user or can automatically be provided or presented to the user. This way a user can use a content providing service at no or lower cost, but the selection of content is limited to the content available in the local storage. In addition, a content provider needs a way to add new content to the local storage or in some cases even add updated content to the local storage.

An existing solution is disclosed in the European patent EP 1 209 928 B1 from Nokia Corporation. EP 1 209 928 discloses a server for use in a vehicle whereon local content is stored. The server has a first wireless interface for providing a connection for local user terminals, a second wireless interface for providing a connection to an external mobile network and a third wireless interface for providing a broadband connection to an external network.

The first wireless interface is used for communication between the server and the user terminals. This means that the first wireless interface is used for transporting content such as local content from the server to the user terminals on the vehicle. The second wireless interface is an always active connection which provides access from the server to external sources of content. This enables the server to retrieve content which is not locally available from external sources via a mobile network. The third interface is a broadband connection to an external network. Such an external network is typically only available at certain locations where the vehicle is stationary for a period of time, so called hot-spot locations. At a hot-spot location, the server has a broadband connection to external sources of content via the third wireless interface. The third wireless interface is used in combination with or as an alternative to the second wireless interface at hot-spot locations. In addition, the third wireless interface may be used by the server to obtain updates for the local content on the server.

EP 1 209 928 thus discloses a system which combines both local storage and retrieving content from external sources when needed in a single server device. This means that users are generally able to retrieve content quickly from the local storage in the server and content which is currently not available can be retrieved from an external source by the server whenever needed.

The most important drawback of the system disclosed in EP 1 209 928 is related to the increasing number of available types of mobile terminals and the wide range of different specifications and features provided by these mobile terminals. Each type of user terminal has specific characteristics such as screen resolution, mono or stereo sound, loudspeaker or only headphones, various supported file formats, supported video codecs and audio codecs, supported software to run applications such as Java or Flash, different versions of such software, etc. As described above, the use of terminals already owned by a user is preferred because this avoids the need of additional terminals for each user, either owned by the user or provided on the vehicle. The biggest drawback of server described in EP 1 209 928 is that certain pieces of content that are stored on the server or that are obtained from an external source may be offered to user terminals which are unable to use those pieces of content or which cannot present the content to the user of the terminal in an optimal way. For instance a piece of content may be in a particular resolution which does not fit onto the screen of a user terminal. The user terminal may therefore decide not to present the content to the user which can be experienced as service outage. Such situations are certainly to be avoided when users are being charged for the content they retrieve on their terminal. In addition, the user's terminal may need to rescale the content item before presenting it to a user which may lead to an increased waiting time between requesting the content and actually being able to experience the content. The situation is especially relevant when specific encoding formats are used for instance when watching video. In such case, if a user terminal does not support a particular encoding format, it is impossible to present the content item or use the content item. These problems may frustrate the user as he loses time and potentially money while downloading content and waiting for the content only to discover that the content cannot be used or experienced.

The server of EP 1 209 928 is furthermore unable to personalize content according to the preferences of a user. Although the server of EP 1 209 928 might be able to provide advertisements to the user, these advertisements will be generic advertisements aimed at the general public and may therefore be of little to no interest for a particular user.

A second drawback is that the server in EP 1 209 928 relies on a complex hardware design incorporating three wireless communication interfaces which need to operate simultaneously. Depending on the selected technologies for such wireless interfaces, this may lead to interference between various interfaces which in turn reduces the available capacity on the communication links. This may even lead to a disturbance in the service for the users. The server further relies on expensive links via the second wireless interface in addition to the less expensive link via the third wireless interface to provide certain content, which may not even be useable to the user requesting that content. The expensive links may also be shared by a number of users simultaneously, which means that the server may need to employ a Network Address Translation (NAT) scheme in order to provide access to external sources via the second communication interface. This requires balancing of outgoing connections in order to divide the bandwidth equally amongst the various users to ensure that each user is able to access his external content. The use of NAT and load balancing make the known server a complex system which may lead to a high price for acquiring such a server and thus may influence the price of the services offered to the users.

In summary, the server as described in EP 1 209 928 provides content to a user from an internal storage or an external source using a complex system of hardware and software, while still not being able to provide content in an appropriate or optimized format or version to a user terminal and while being unable to personalize the content.

It is an objective of the present invention to provide a content delivery system which is able to provide content optimized to terminal specifications and/or personalized to user preferences or specifications. It is another objective of the present invention to provide a content delivery system which has a low bandwidth cost and reduced storage costs.

### Summary of the Invention

The objectives of the present invention are realized and the drawbacks of the prior art are overcome by an on-board content delivery system comprising at least one module for delivery of content to a mobile terminal of a user on board of a vehicle, the system comprising:
- storage means for storing content items; and
- communication means for communication with the mobile terminal, the communication means comprising a wireless communication interface,
characterized in that the system further comprises:
- processing means for obtaining a user-specific and/or terminal-specific version of a requested content item before and/or during delivery of said user-specific and/or terminal-specific version;
and further characterized in that:
- the communication means are coupled to the processing means for transferring said user-specific and/or terminal-specific version to the mobile terminal.

Indeed, by having processing means which are able to obtain a user-specific and/or terminal-specific version of a requested content item, the content delivery system is able to provide versions of content items which are adapted or optimized for a certain user terminal (terminal-specific) or personalized to user preferences, context or characteristics (user-specific). The coupling between the communication means and the processing means enable the system to deliver a user-specific and/or terminal specific version of a requested content item to the mobile terminal of a user.

The content delivery system according to the present invention is aimed at providing content items to users on a vehicle, in particular to travellers and commuters on vehicles such as busses, trains, airplanes, etc. Each user has a mobile terminal, preferably their own mobile terminal such as a mobile phone or personal digital assistant but terminals may be available on the vehicle. A user can use such a terminal during his journey if he does not posses his own terminal or does not wish to use his own terminal or is unable to do so in cooperation with the service, for instance due to technical problems.

In view of the present invention, a content item is considered as a piece of content which can be experienced by a user. Typical examples include audio fragments, video fragments, pictures, games, advertisements, traffic information, etc. Experiencing such content items can range from viewing a picture to listening to audio fragments, playing the game, watching video, etc. When referring to a content item, it is to be understood as a piece of content which was not processed by the content delivery system and thus a piece of content which is not adapted to terminal specifications or user preferences.

The content delivery system offers a range of content items from which a selection can be made by the user. A user may explicitly request a particular content item out of those content items that are available on the delivery system, in which case a requested content item is a content item requested by a source external to the content delivery system such as the user or the mobile terminal of the user, or may receive suggestions about content items that a user may want to see, in which case a requested content item is a content item requested by a source internal to the content delivery system such as a selection element which requests content for a user based on the user specifications, viewing history, etc. Thus the system may be interactive leaving the user a chance of selecting content items or may be non-interactive whereby the user receives content items which are selected by the system. Once a content item out of the available content items is requested, the content delivery system obtains a user-specific and/or terminal-specific version of the requested content item by processing it before and/or during delivery by the content delivery system. In summary, the content delivery system is able to provide various versions of the same content item, each version being specific for a particular user and/or terminal.

The content delivery system of the present invention is made up out of one or more modules which each may provide all or some of the features listed above. For instance in certain embodiments, the storage means may be a separate module from the processing and communication means. Alternatively in some embodiments, there may be a number of modules with communication means which are all coupled to a single module with storage and processing means. Having multiple modules with different features enables easy replacement of a failing module or upgrading of a particular module, whereas a system made up out of a single module would have to be replaced entirely or may need to be deconstructed entirely or partially in order to replace certain elements or components. Having multiple copies of the same module in the system can render the system more powerful. For instance having two modules with communication means coupled to the same processing means provides a larger coverage and additional bandwidth for users. Similarly, having multiple modules with processing means allows for load balancing or specific processing functions for each module.

The storage means provide some form of storage capacity to the system and may for instance be a hard-disk drive, a solid state drive, non-volatile flash memory, etc. The content items can be stored on the storage means in a hierarchical structure, a tree structure, in a database, etc. In general the storage means provide easy storing and retrieval of content items stored thereon.

The communication between the communication means of the system and the mobile terminals is generally wireless communication. Wireless communication such as Bluetooth communication or WiFi communication are or free to use and provide sufficient bandwidth for speedy delivery of content items to mobile terminals. A wired interface may exist between the content delivery system and the mobile terminals. However, a wired connection is difficult because it reduces the mobility of the mobile terminals and various mobile terminals may not even support a wired connection. Those who do support a wired connection may be provided with a wide range of connectors making it very difficult to provide a content delivery service based on wired connections or using wired connections to the mobile terminals.

Furthermore in the light of the present invention, obtaining a user-specific and/or terminal-specific version of a requested content item includes selecting a user-specific and/or terminal-specific version of a requested content item from storage where the appropriate user-specific and/or terminal-specific version of a requested content item is available in the storage means, adapting or modifying a version of the requested content item according to user preferences, profile, context or terminal specification where the appropriate user-specific and/or terminal-specific version of a requested content item is not available in the storage means and a combination of selection and adapting. For instance, upon request of a particular content item, the system may obtain the user-specific and/or terminal-specific version of that requested content item by selecting a terminal-specific version which is already available and by adapting that terminal-specific version with the addition of personalized content to also make it user-specific. In addition, obtaining may also involve selecting and/or retrieving a user-specific and/or terminal-specific version of the content item from a source remote to the content delivery system or retrieving a req uested content item from a remote source and processing the requested content item into a user-specific and/or terminal-specific version of the requested content item before delivery.

The processing may be performed before delivery, for instance when content items are added to the storage means, the system may perform some processing on these content items to already prepare a number of predefined user-specific and/or terminal-specific versions of this content item. The processing can also occur during delivery, i.e. the system may be able to process a content item into a user-specific and/or terminal-specific version of that content item simultaneously with the delivery. Of course a combination of processing before and during may also be possible. For instance a part of the processing may be performed before delivery starts and the remaining processing may be performed while delivery occurs.

When processing occurs before delivery, the system may store the user-specific and/or terminal-specific version of a content item on the storage means permanently or temporarily. Permanent storage enables fast retrieval of a user-specific and/or terminal-specific version of a content item when that user-specific and/or terminal-specific version of the content item is required for delivery, but requires more storage space on the storage means. Temporary storage has a lower storage requirement but may result in obtaining the same specific version of a content item repeatedly without requiring a lot of computational power. However it may also be possible to store user-specific and/or terminal-specific versions of content items which are obtained during the delivery. For instance the system may process a content item into a user-specific and/or terminal-specific version of that content item, stream that specific version of the content item to a mobile terminal and store the streamed user-specific and/or terminal-specific version of that content item in the storage means for usage by other users on the vehicle requiring the same user-specific and/or terminal-specific version of the requested content item.

When one or more user-specific and/or terminal-specific versions of content items are stored in the storage means, the obtaining may be limited to the selection of the most appropriate user-specific and/or terminal-specific version of the requested content item for delivery to the mobile terminal of a particular user. In addition, obtaining may also include selecting a version that suits a particular user from the storage means and if such suited version is not available, obtaining may involve adapting or modifying of a requested content item into a user-specific and/or terminal-specific version of the requested content item which is suitable for the user.

The advantage of the system according to the present invention is that the system is able to provide user-specific and/or terminal-specific versions of content items which are suited for a specific user and/or his mobile terminal. This means that a content item which may not be suited for that user or mobile terminal can be processed into a version of that content item which is suited for the user and his terminal. By doing this in the on-board module, there is no need to transfer all possible user-specific and/or terminal-specific versions of all the available content items to the storage means which reduces the need of massive, expensive storage means on board the vehicle and which reduces the expensive wireless transfer of all these user-specific and/or terminal-specific versions of content items from remote servers onto the on-board content delivery system. It is however not excluded that some user-specific and/or terminal-specific versions of content items are placed onto the storage means.

Optionally the processing means of the on-board content delivery system according to the present invention may comprise means for obtaining the user-specific and/or terminal-specific version based on at least one specification of the mobile terminal.

Further optionally the at least one specification may be one or more of the following:
- resolution of a display of the mobile terminal;
- available processing power in the mobile terminal;
- available buffer capacity in the mobile terminal;
- available bandwidth capacity of the mobile terminal;
- data formats supported by the mobile terminal; and
- brand and/or type of the mobile terminal.

The system may thus be able to change the content items which are stored on the storage means according to the specifications of the mobile terminal. For instance the system may include a software algorithm which modifies specifications of a content item and thereby obtains a user-specific and/or terminal-specific version of the content item with specifications different than those of the content item from which it was obtained or derived. In an ideal scenario, the original content item is retained on the storage means to serve as base from which user-specific and/or terminal-specific versions of the content item can be obtained. A particular movie fragment may be available in a high resolution as one of the content items stored on the storage means. The processing means can then modify this high-quality and high-resolution version to meet certain specifications of the mobile terminals. If two different terminals want to receive that particular content item, the processing means can obtain a user-specific and/or terminal-specific version of the content item based on the high-quality and high-resolution content item and these user-specific and/or terminal-specific versions may be different for these mobile terminals. Thus one content item can lead to multiple user-specific and/or terminal-specific versions of the same content item. These versions may differ in one or more characteristics from each other. It is however not excluded that the high-resolution content item is also delivered to the mobile terminal of a user. For instance, the high-resolution content item may in fact be a user-specific and/or terminal-specific version of that content for high-end terminals on board the vehicle that are capable of presenting content items in the highest quality, resolution, lossless compression, etc.

By taking into account the specifications and characteristics of mobile terminals while processing a content item, it is possible to provide a version of a content item to a mobile terminal which is suited for that mobile terminal and which is considered terminal-specific. By using information such as resolution of a display, the system is able to generate a user-specific and/or terminal-specific version of a content item which matches the resolution of the mobile terminal. This way, the mobile terminal is able to display the terminal-specific version of the content item without a need for changing the resolution in an optimal format. Similarly, by taking into account the supported data formats, it is possible to deliver a terminal-specific version of a content item which can be decoded or processed by the mobile terminal. Thus a situation wherein a version of a content item is delivered which cannot be processed by the mobile terminal is avoided. A user-specific and/or terminal specific version of a content item can also be considered as a content item which is optimized for a particular terminal and may also be called an optimized content item or a terminal-specific version of a content item.

Information such as available processing power, buffer capacity and bandwidth can be used to fine-tune the delivery process of the requested content item. For instance, it is possible to use the full bandwidth to deliver content items when the receiving mobile terminal has a large buffer and high processing capacities. However, when the mobile terminal has a small buffer, the use of all available bandwidth may lead to a buffer overflow which in turn leads to problems in reception of new data and thus to the processing of the content item by the mobile terminal.

An additional advantage of the present invention is that the various versions of the content item can be generated by the processing means when needed. Popular versions may be locally stored, but rare versions may be obtained when requested by a user or the system itself. This way the storage requirements are reduced as not each possible version has to be stored on the module, while each possible version is available for a user when requested. As such, all possible combinations of user-specific and/or terminal-specific versions can be generated by the system, even when not available on the local storage means.

Optionally, the processing means of the on-board content delivery system according to the present invention may comprise means for obtaining the user-specific and/or terminal-specific version based on a user profile and/or user context.

Further optionally the user profile and/or the user context may comprise one or more of the following:
- current location of the user;
- current time;
- route of the vehicle and/or the user;
- demographic information of the user;
- quality of the communication with the mobile terminal; and
- distance between the module and said mobile terminal.

Further optionally the user-specific and/or terminal-specific version may comprise personalized content.

In addition to modifying a content item according to specifications of a mobile terminal, or as an alternative thereto, the processing may be the personalization of the content item to obtain a user-specific and/or terminal-specific version of a requested content item which matches the user profile and/or user context of the user. Such a user-specific and/or terminal-specific version of a content item which only matches the user profile and/or user context can be called a user-specific version or a personalized version. The user-specific version of the content item after personalization takes information such as the user profile and user context into account. Obtaining a user-specific version of a particular content item may involve inserting personalized content into the content item, adding advertisements and/or other personalized content items to the content item, etc. Thus, a user-specific version of a content item can be a content item which is personalized by the processing means by adding personalized content to the content item.

Personalized content can be advertisements which relate to the interests of a user as defined in a user profile, to the current location of the user, the destination of the user or the vehicle, etc. Adding personalized content ensures that a user receives a version of a requested content item which may or may not be modified according to the specifications of his mobile terminal and which corresponds to his interests and/or context. A user may receive only advertisements which correspond to his hobbies and interests or viewer profile of content items, etc. or advertisements which correspond to shops and services that the user is likely to pass or visit in the near future. Personalized content may also take into account the time of day in order to provide food related advertisements or information around lunch or dinner time.

Such personalized content is more attractive for a user and may lead to a higher rate of success for the advertisers or providers of information. Especially in case of advertisements, a user may be more willing to follow up on an advertisement because the information he received suits a current need or desire such as food at noon. Other personalized information may include traffic information, schedule information of public transport, sports results, etc. Such information can improve the quality of a users experience because he has information which is useful in addition to the content item whereto the personalized information is added.

Advertisements can also be used by content delivery service providers to generate revenue. This enables the service provider to reduce the fee for the use of the service or even to offer the service for free. Low-cost services or free services which provide a user with entertainment and/or information can be regarded as interesting to the users and are therefore more likely to be used.

Alternatively to adding personalized content, personalization may also mean the selection of appropriate content items for a user. In certain embodiments, a user may not request content items which can be adapted according to the user and/or his terminal. Instead, the user may receive a list of content items which are available and which have been selected from all the available content items based on a user profile and/or the context of a user. In such case, personalization relates especially to selection of content items from available content items on the on-board content delivery system. Of course, such personalized content item may still be modified according to the characteristics of the mobile terminal and or the user context and/or the user profile.

In addition, information such as link quality, distance between the module and the mobile terminal etc. may be used for personalizing the content in terms of service and delivery. For instance if the link quality is bad, the delivery of a version of the content item may include additional error correction information, the speed of delivery may be reduced, content quality may be altered, etc.

By performing the adaptation of a particular content item to the profile and/or context of a user on the on-board system, it is possible to reduce the storage requirements of the system as it avoids the need of storing all possible combinations of either terminal-specific and/or user-specific versions of each content item.

Optionally the on-board content delivery system according to the present invention further comprises means for obtaining the user profile and/or user context from the mobile terminal.

Further optionally the on-board content delivery system according to the present invention further comprises means for obtaining at least one terminal specification of the mobile terminal.

User profile information may be stored on the storage means of the system. However in a typical example where the on-board system is used on buses, this means that each bus has to store each known user profile, even if users might travel on different buses, or connect over an external mobile network to obtain this user profile which increases the costs of the service. As an alternative, the user may store his user profile on his mobile terminal. The content delivery system then needs means to obtain the user profile from the mobile terminal. The content delivery system can for instance request profile information from the mobile terminal via the communication means of the system. Alternatively to requesting the profile information, a mobile terminal may provide required information when establishing communication with the system or upon requesting content items or a list of available content items.

In addition to the user profile, the system may also retrieve some or all elements of the user context from the mobile terminal. For instance the current geographical position of a user may be determined by a GPS module in the mobile terminal which then can provide the location to the content delivery system. Alternatively the user context can be determined by the system itself. For instance the current time, route of the vehicle or geographic location can be determined by the system.

In order to obtain a version of a requested content item which is terminal-specific, the platform needs to know about the specifications of a particular terminal. The system may therefore comprise means for obtaining such information from a user terminal. The system may receive a list of terminal specifications from a terminal when content is requested or when a terminal accesses the content delivery system. However the system may also contain a list of terminal brands and types with for each brand and/or type a list of specifications. This way the system is able to determine the specifications of a particular terminal based on that list. For instance, when a terminal is activated and attempts to access the service, it can send an indication of its brand and type. The system can then retrieve the specifications for that terminal from a list or database. The list or database may be stored locally on the content delivery system or may be available from a central storage or server.

Optionally the communication means of the on-board content delivery system according to the present invention may comprise a communication interface for retrieving updated content items.

The communication means may comprise a single physical wireless communication interface which can be used for communication with the mobile terminals and for retrieving updated content items from an external storage. Alternatively the communication means may comprise a distinct physical interface for retrieving updated content items and a distinct interface for communication with the mobile terminals.. When different communication technologies are used for communication with mobile terminals and for retrieving updated content items, it could be beneficial to have distinct physical communication interfaces. For instance, the communication means may have a first wireless communication interface which provides a short-range radio-frequency communication link such as a Bluetooth link or Ultra Wideband link between the system and the on board mobile terminals and a second wireless communication link which provides a high-bandwidth radio-frequency communication link such as a WiFi or WiMax link whereover updated content items can be retrieved from an external network or remote servers.. Alternatively to RF based communication links, it is also possible to use optic communication links such as infrared communication links, laser links, etc.

As an alternative or an addition to a wireless communication interface, the communication means may also provide a wired communication interface. Interfaces such as optic fibre links, copper wire based communication links such as USB links, IEEE 1394 links, serial links, etc. can be used to provide a version of requested content items to the mobile terminal of a user and/or to retrieve updated content items from external networks or remote servers. The communication means may also comprise both a wired and a wireless communication interface with the same purpose. For instance the communication means may comprise both a wireless and wired communication interface for retrieving updates and/or for communication with the terminals. However, as described above, a wireless interface has advantages over a wired interface in terms of mobility and interoperability.

As an alternative to receiving updates via wired or wireless communication, the system may be coupled to a medium containing updates such as a compact disc, digital versatile disc, solid state memory cards, etc. The system may provide means for accessing such media directly or may be coupled to an external device for access to such media.

Wherever a communication interface is mentioned, it is possible to have a single physical interface or a plurality of physical interfaces. For instance, the wireless communication interface whereover the system communicates with the mobile terminals may be a single transceiver and antenna, or may be a plurality of transceivers and/or antennas. Similarly, the communication interface which is used for retrieving updated content items may be a single physical communication interface or a plurality of communication interfaces.

An updated content item can be a content item or a user-specific and/or terminal-specific version of a content item which was already present on the storage means which has changed or an updated content item can be a new content item which was not yet present on the storage means. Thus, updated content items can be used to change the content items which are available in the storage means. This way a content delivery service provider is able to improve and/or make accurate available content items and extend the list of available content items. The updated content items may also provide a way of removing existing content items from the storage means, for instance by providing a new version of the content item or via control instructions. For instance when the service is used to offer news fragments to commuters, old news fragments may be removed from the storage means and breaking news may be updated regularly when new information is available.

Updated content items may be processed by the processing means upon arrival. For instance the system may be configured to obtain a set of user-specific and/or terminal-specific versions of each updated content item. This set may for instance consist of the terminal-specific version of each content item for the most popular mobile terminals and may be user-specific for the most common user profiles or user context situations. After the processing, the obtained user-specific and/or terminal-specific versions of content items can be stored on the storage means in addition to the already present content items and user-specific and/or terminal-specific versions of content items.

Optionally, the communication means of the on-board content delivery system according to the present invention may be able to retrieve updated content only via non-permanent connectivity to the communication means.

The communication means can use a wireless communication interface to retrieve updated content items. Certain wireless communication interfaces are permanently available. For instance GPRS, UMTS, HSDPA, etc. are technologies which can be used from everywhere within coverage range of antennas for communication with a server or central storage which is not part of the content delivery system on the vehicle. However these permanent connections are often limited in bandwidth and come at a higher price. Communication over the limited bandwidth and those technologies may increase the price for the consumer to use the services.

It may therefore be beneficial to use a high-bandwidth and cheap communication link for retrieving updated content items. A typical example is WiFi, which has sufficient bandwidth capacity and is generally cheaper to use as is operates in a license-free spectrum. A service provider may for instance provide WiFi access points along the route of a bus or train. At such access points, the on-board content delivery system of the vehicle is able to retrieve updated content items at low cost and at a high speed.

The present invention further relates to a method for delivering content to a mobile terminal of a user on board of a vehicle comprising the steps of:
- storing content items in storage means of an on-board content delivery system;
- communication between the communication means of the on-board content delivery system and the mobile terminal;
characterized in that the method further comprises the steps of:
- obtaining a user-specific and/or terminal-specific version of a requested content item before and/or during delivery of the user-specific and/or terminal-specific version; and
- delivering the user-specific and/or terminal-specific version to the mobile terminal.

### Brief Description of the Drawings

Fig. 1 illustrates a vehicle wherein a content delivery system according to the present invention is installed; and
Fig. 2 illustrates a schematic hardware overview of an on-board content delivery system according to the present invention.

### Detailed Description of Embodiment(s)

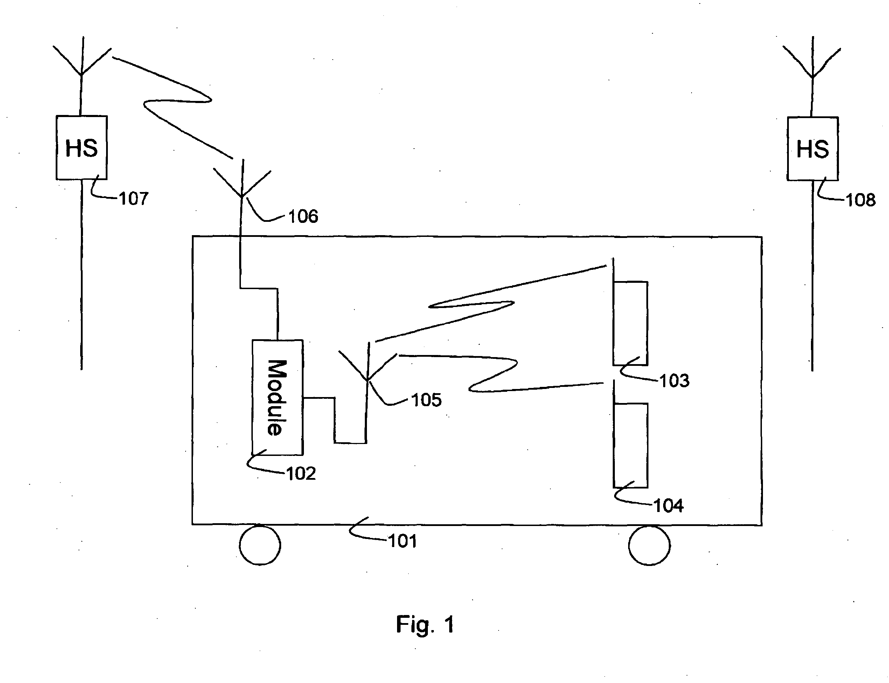

Fig. 1 shows a vehicle 101 which in this particular example is a bus. However the vehicle could also be a train, a car in a train, an airplane, etc. The bus 101 has an embodiment of the on-board content delivery system according to the present invention which is shown as module 102. Furthermore, there are two users with mobile terminals 103 and 104 on board of the bus. The mobile terminals 103 and 104 are in connection with the module 102 via a wireless interface shown as antenna 105. In this particular example antenna 105 is used for Bluetooth communication between the module 102 and the mobile terminals 103 and 104, but other wireless communication protocols could be used such as WiFi or optical communication technologies. The module 102 is also able to connect to a hotspot (HS) 107 or 108 via antenna 106.

The module 102 has a number of content items stored, in this particular embodiment video fragments, advertisements, traffic information and weather reports in high-quality and non-encoded form. Specific versions of these content items can be obtained by the module 102 according to specifications of mobile terminals such as terminals 103 and 104 or according to the user profile and/or context of the users of terminals 103 and 104. A user may request a particular content item from module 102 via his mobile terminal 103 or 104, or the system 102 may request a particular content item for a particular user. The module 102 can then use its processing means to obtain the user-specific and/or terminal-specific version of the requested content item and deliver that version of the requested content item to the mobile terminal of the user. This enables the user to experience the delivered content item in optimal and personalized format. In addition to matching the characteristics of the mobile terminals 103 and 104, the content delivery system 102 can also insert advertisements into the requested content items and/or add personalized content to the requested content items.

For instance the case in which the user of terminal 103 requests a video fragment. The content delivery system 102 retrieves the video fragment from the storage and determines the optimal specifications based on the characteristics of terminal 103. These characteristics include the resolution of the display, buffer size of the terminal 103, available processing means, supported codecs, etc. The processing means of the on-board content delivery system obtains a terminal-specific version of a requested content item for terminal 103 by modifying or adapting the requested content item according to those characteristics. The original content item is retained in the storage whereas the terminal-specific version of the content item can be sent to the terminal 103 via the communication means and antenna 105. In addition, the processing means can insert or add personalized content such as advertisements into the terminal-specific version of the requested content item and thereby obtain a version of the content items that is both user-specific or personalized as well as terminal-specific or optimized. In one embodiment, the personalized content may be added to the video fragment itself, similar to commercial breaks during television programs. In other embodiments, the advertisements can be send along with the specific version of the content item in order for the advertisements to be shown as a banner along with the specific version of the content item. In other embodiments, a separate advertising video fragment can be send to the terminal, separately from the requested video fragment, which can be presented before presenting the actual requested video fragment. Of course combinations of these embodiments are also possible. Banners may be separate from the part of the screen whereon the user-specific and/or terminal-specific version of the content item is shown or may be shown on top of the video fragment, like a watermark, a picture in picture, a pre- or post-roll or like an alpha layered video, in the terminal-specific and/or user-specific version of the content item.

At each hotspot location 107 and 108, the vehicle 101 stops to load and unload passengers. During that period of time, the content delivery system 102 is able to retrieve updated content items via the hotspot 107 or 108. These hotspots 107 and 108 are connected to a central storage of content items which may also provide certain processing capabilities. For instance, the central storage may already provide a few terminal-specific and/ore user-specific versions of video fragments which are tailored to the characteristics of the most popular mobile terminals available on the market and the most common target user groups for advertisers. This way, there is no need for processing content items several times on-board of the vehicle to meet the characteristics of very common terminals.

These hotspots 107 and 108 may deliver data from the central storage directly to the content delivery system 102 or may have an internal storage which stores the updated content items until vehicle 101 arrives. The hotspots 107 and 108 may provide a specific set of updated content items for each vehicle or there may be a single set of updates which is sent to every vehicle 101 that passes at the hotspot 107 and 108. In certain embodiments, updates may be divided over multiple hotspots 107 and 108 such as hotspot 107 provides the first half of the updated content items and hotspot 108 provides the second half of the updated content items. In alternative embodiments, each hotspot location 107 and 108 has the same content items available for updating the content items stored in the system 102 on-board of vehicle 101. The hotspots 107 and 108 may either push the content onto the system 102 of vehicle 101 as soon as vehicle 101 is within communication range of the hotspot 107 or 108 or the system 102 on vehicle 101 may request an update from the hotspot 107 or 108 as soon as it finds itself within communication range with hotspot 107 or 108.

In other embodiments, the content delivery system 102 may be separated over carriages of the same train. In such case, updated content items can be sent to one module of the content delivery system, after which the system will ensure the updated content items reach the other modules of the system on the other carriages in the train.

The hotspots 107 and 108 can communicate with vehicle 101 and the system 102 thereon via antenna 106 of the vehicle 101. The antenna may be a WiFi antenna connected to a WiFi interface of the communication means in the system 102. Alternatively the antenna 106 may be of a different wireless communication technology such as radio-frequency based systems or optical communication systems. For instance, in addition to or as alternative for WiFi, Bluetooth, UWB, etc. may be used for retrieving updated content items. Should no hot-spot locations be available, mobile network technologies such as WCDMA, GPRS, EDGE, UMTS, WiMax, etc. could be used instead at specific time intervals to download updated content items.

It should be noted that although the main example given above is video, the present invention can also be used to deliver content such as audio fragments, for instance news information, music, sports reports, weather forecast, etc. and content such as text, images, games, etc. In addition it is also possible to deliver combinations of types of content. For instance a video fragment can be shown with text-based information on top of the video fragment.

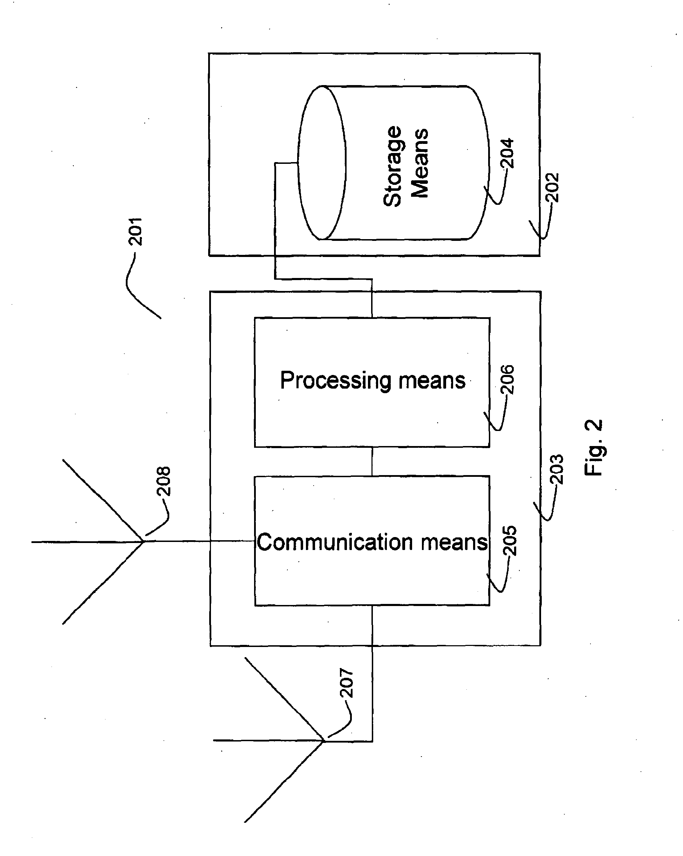

Fig. 2 illustrates a hardware overview of an embodiment of the present invention. It shows a content delivery system 201 consisting of a first module 202 which houses the storage means 204 and a second module 203 which houses the communication means 205 and the processing means 206. The communication means 205 in module 203 are connected to an antenna 207 which corresponds for instance to antenna 105 of Fig. 1 and is thus used for communication within the vehicle whereon system 201 is mounted and an antenna 208 which corresponds for instance to antenna 106 of Fig. 1 and is used for retrieving updated content items.

The module 202 which houses the storage means 204 can be located at a different location than the module 203. However, both modules are located on the same vehicle. The same vehicle is for instance within the same bus but also different cars connected together to form a train are considered as part of the same vehicle. Using two modules 202 and 203 allows the service provider to locate certain features close to the user such as processing and communication while locating other features closer to for instance the driver or operator of the vehicle. In other embodiments, there may be several modules 203 connected to module 202, for instance one module 203 for each car in a train.

The storage means 204 are a non-volatile storage medium such as one or more hard disk drivers, flash drivers, solid state drives, etc. which are used to store content items. In addition to content items in a non-processed form such as in high resolution, high quality and without any audio or video compressing, there may also be additional information available on the storage means 204. For instance there may be meta-data indicating what a particular content item is about, content for personalizing content items, advertisements, etc. which can be added or inserted to the content items. The storage 204 may be organized as a large database, a dump of data, an organized tree structure of data or a combination thereof. For instance a database may be used to indicate where a particular piece of data is stored on the storage 204. A database may also be used to indicate whether specific versions of a particular piece of content are already available on the storage 204.

The processing 206 provides functionality for obtaining a user-specific and/or terminal-specific version of a content item which includes selecting content items from storage, adapting content items and adding and/or inserting personalized content into content items. Once a requested content item is obtained for a specific mobile terminal and/or user profile and/or context, with or without adapting that piece of content, it becomes a user-specific and/or terminal-specific version of that particular content item which can be delivered to the mobile terminal. The processing 206 therefore provides a processing unit which executes one or more instructions to achieve the desired result.

Adapting a content item to the characteristics of a particular mobile terminal may involve a first algorithm to rescale the content item according to the resolution of that mobile terminal. The adapting may then include a second algorithm for converting the rescaled content item to a particular frame rate and/or encoding of the content item, based on the processing power and supported video and/or audio codecs of the mobile terminal. The processing 206 can also mean the including of advertisements or of personalized content. Each processing step may consist of one or more specific algorithms or the entire processing may be done using a single algorithm or instruction set which perform the required adaptations. Alternatively to a processing unit executing instructions defined by one or more software applications, the processing means 206 may also consist of several hardware units which perform one or more specific tasks. For instance there may be a hardware element in processing 206 which is designed for encoding content items. By performing such tasks in hardware, the speed at which encoding occurs is increased. Of course the processing 206 may also be a combination of specific hardware and software elements, such as rescaling may occur via a software algorithm and encoding may occur via a specific hardware element.

The processing 206 may further also be able to retrieve user profile information user context information and/or terminal information from a particular mobile terminal. The processing 206 may therefore communicate with the terminal via communication means 205 and receive responses from the mobile terminals via communication means 205. Alternatively, the system may contain a separate element for obtaining such information. The separate element may be coupled to the communication means 205 or may be integrated into the communication means 205.

The communication means 205, which are connected to the antennas 207 and 208 are used by the system 201 to communicate with external elements such as the mobile terminals and update locations such as the external hot-spots. In this particular example the communication means 205 contain two different transceivers, each with their own antenna. A first transceiver provides Bluetooth communication between the module 203 and a mobile terminal via antenna 207. Bluetooth provides sufficient bandwidth for streaming content items to mobile terminals and for interactive communication between the system 201 and the mobile terminals.

Alternatively to Bluetooth, the system 201 may contain a transceiver for UWB, WiFi, infrared communication, etc. to enable communication between the system 201 and the mobile terminals. Care should be taken that a communication technology is selected which ensures the mobility of the mobile terminals and which is able to communicate with several mobile terminals simultaneously. For instance a single infrared transceiver may not be able to communicate with three terminals as each terminal requires a line-of-sight with the infrared transceiver. However, if the antenna 207 is replaced with a number of infrared transceivers spread around the vehicle, it is possible to provide communication with several mobile terminals.

In addition to communication with mobile terminals, the module 203 is also able to communicate with certain hot-spots, or update devices which typically are located along the route of the vehicle wherein the system 201 is mounted. These update devices can for instance be WiFi access points which provide access to a central storage from where the module 203 can retrieve updated content items. Such an update device or hot-spot may also include storage whereon the updated information is stored. Having storage at the update device enables a faster retrieval of updated content items because there is no need to retrieve these items from a central storage by the update device over a network. The update devices or hot-spots may also be able to perform some sort of processing similar to that in the on-board system 201, as may the central storage or server.

It should be noted that although the drawings only illustrate a content delivery system in one or two modules, it is able to have a system made up out of more than two modules. In addition, the distribution of elements amongst the modules may vary from those shown in Fig. 1 or Fig. 2. For instance in an alternative embodiment, the processing means 206 may be part of module 202 and not module 203. There may also be embodiments with one central storage in the driver's cabine of a train with a processing unit in each car of that train and several modules with communication means spread in each car. These communication modules may provide both antennas, or may only be used for communication with the mobile terminals. In the latter case, there may be an addition communication module at the front of the train coupled to the storage module in order to retrieve updates.

It should also be noted that whenever and/or is used throughout this text, it is to be understood as including either of the options or both options. For instance user-specific and/or terminal-specific is to be considered as either user-specific, terminal-specific or user-specific and terminal-specific.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

## Claims

1. An on-board content delivery system (201) comprising at least one module(102; 202, 203) for delivery of content to a mobile terminal (103, 104) of a user on board of a vehicle (101), said system (201) comprising:
- storage means (204) for storing content items; and
- communication means (205) for communication with said mobile terminal (103, 104), said communication means (103, 104) comprising a wireless communication interface,
**characterized in that** said system (201) further comprises:
- processing means (206) for obtaining a user-specific and/or terminal-specific version of a requested content item before and/or during delivery of said user-specific and/or terminal-specific version;
and further **characterized in that**:
- said communication means (205) are coupled to said processing means (206) for transferring said user-specific and/or terminal-specific version to said mobile terminal (103, 104).

2. The on-board content delivery system (201) as defined in claim 1,
**characterized in that** said processing means (206) comprise means for obtaining said user-specific and/or terminal-specific version based on at least one specification of said mobile terminal (103, 104).

3. The on-board content delivery system (201) as defined in claim 2,
**characterized in that** said at least one specification is one or more of the following:
- resolution of a display of said mobile terminal (103, 104);
- available processing power in said mobile terminal (103, 104);
- available buffer capacity in said mobile terminal (103, 104);
- available bandwidth capacity of said mobile terminal (103, 104);
- data formats supported by said mobile terminal (103, 104); and
- brand and/or type of said mobile terminal (103, 104).

4. The on-board content delivery system (201) as defined in claim 1,
**characterized in that** said processing means (206) comprise means for obtaining said user-specific and/or terminal-specific version based on a user profile and/or user context.

5. The on-board content delivery system (201) as defined in claim 4,
**characterized in that** said user profile and/or user context comprises one or more of the following:
- current location of said user;
- current time;
- route of said vehicle (101) and/or said user;
- demographic information of said user;
- quality of said communication with said mobile terminal (103, 104); and
- distance between said module (102; 202, 203) and said mobile terminal (103, 104).

6. The on-board content delivery system (201) as defined in claim 1,
**characterized in that** said user-specific and/or terminal-specific version comprises personalized content.

7. The on-board content delivery system (201) as defined in claim 2,
**characterized in that** said module (102; 202, 203) further comprises means for obtaining said at least one specification of.said mobile terminal (103, 104).

8. The on-board content delivery system (201) as defined in claim 4,
**characterized in that** said module (102; 202, 203) further comprises means for obtaining said user profile and/or said user context from said mobile terminal (103, 104).

9. The on-board content delivery system (201) as defined in claim 1,
**characterized in that** said communication means (205) comprise a communication interface for retrieving updated content items.

10. The on-board content delivery system (201) as defined in claim 9,
**characterized in that** said communication means (205) are able to retrieve said updated content items only via non-permanent connectivity to said communication means (205).

11. A method for delivering content to a mobile terminal (103, 104) of a user on board of a vehicle (101) comprising the steps of:
- storing content items in storage means (204) of an on-board content delivery system (201);
- communication between said mobile terminal (103, 104) and communication means (205) of said on-board content delivery system (201);
**characterized in that** said method further comprises the steps of:
- obtaining a user-specific and/or terminal-specific version of a requested content item before and/or during delivery of said user-specifc and/or terminal-specific version; and
- delivering said user-specific and/or terminal-specific version to said mobile terminal (103, 104).

## Amended claims

### Amended claims in accordance with Rule 137(2) EPC.

**1.** An on-board content delivery system (201) comprising at least one module (102; 202, 203) for delivery of content to a mobile terminal (103, 104) of a user on board of a vehicle (101), said system (201) comprising:
- storage means (204) for storing content items; and
- communication means (205) for communication with said mobile terminal (103, 104), said communication means (103, 104) comprising a wireless communication interface,
**characterized in that** said system (201) further comprises:
- processing means (206) for obtaining based on at least one specification of said mobile terminal (103, 104) a terminal-specific version of a requested content item before and/or during delivery of said terminal-specific version without using an always active connection to external sources of content;
and further **characterized in that**:
- said communication means (205) are coupled to said processing means (206) for transferring said terminal-specific version to said mobile terminal (103, 104).

**2.** The on-board content delivery system (201) as defined in claim 1,
**characterized in that** said at least one specification of said mobile terminal (103, 104) is one or more of the following:
- resolution of a display of said mobile terminal (103, 104);
- available processing power in said mobile terminal (103, 104);
- available buffer capacity in said mobile terminal (103, 104);
- available bandwidth capacity of said mobile terminal (103, 104);
- data formats supported by said mobile terminal (103, 104); and
- brand and/or type of said mobile terminal (103, 104).

**3.** The on-board content delivery system (201) as defined in claim 1,
**characterized in that** said processing means (206) is adapted for obtaining a user-specific and terminal-specific version of said content item.

**4.** The on-board content delivery system (201) as defined in claim 3,
**characterized in that** said processing means (206) comprise means for obtaining said user-specific and terminal-specific version based on a user profile and/or user context and based on at least one specification of said mobile terminal (103, 104).

**5.** The on-board content delivery system (201) as defined in claim 4,
**characterized in that** said user profile and/or user context comprises one or more of the following:
- current location of said user;
- current time;
- route of said vehicle (101) and/or said user;
- demographic information of said user;
- quality of said communication with said mobile terminal (103, 104); and
- distance between said module (102; 202, 203) and said mobile terminal (103, 104).

**6.** The on-board content delivery system (201) as defined in claim 3,
**characterized in that** said user-specific and terminal-specific version comprises personalized content.

**7.** The on-board content delivery system (201) as defined in claim 1,
**characterized in that** said module (102; 202, 203) further comprises means for obtaining said at least one specification of said mobile terminal (103, 104).

**8.** The on-board content delivery system (201) as defined in claim 4,
**characterized in that** said module (102; 202, 203) further comprises means for obtaining said user profile and/or said user context from said mobile terminal (103, 104).

**9.** The on-board content delivery system (201) as defined in claim 1,
**characterized in that** said communication means (205) comprise a communication interface for retrieving updated content items.

**10.** The on-board content delivery system (201) as defined in claim 9,
**characterized in that** said communication means (205) are able to retrieve said updated content items only via non-permanent connectivity to said communication means (205).

**11.** A method for delivering content to a mobile terminal (103, 104) of a user on board of a vehicle (101), said method comprising the steps of:
- storing content items in storage means (204) of an on-board content delivery system (201);
- communication between said mobile terminal (103, 104) and communication means (205) of said on-board content delivery system (201);
**characterized in that** said method further comprises the steps of:
- obtaining based on at least one specification of said mobile terminal (103, 104) a terminal-specific version of a requested content item before and/or during delivery of said terminal-specific version without using an always active connection to external sources of content; and
- delivering said terminal-specific version to said mobile terminal (103, 104).
